(19) **Europäisches Patentamt**
**European Patent Office**
**Office européen des brevets**

(11) **EP 1 489 911 B1**

(12) **EUROPEAN PATENT SPECIFICATION**

(45) Date of publication and mention
of the grant of the patent:
**19.08.2009 Bulletin 2009/34**

(51) Int Cl.:
**A21B 7/00** *(2006.01)* **A21D 8/00** *(2006.01)*

(21) Application number: **03745188.7**

(22) Date of filing: **02.04.2003**

(86) International application number:
**PCT/AU2003/000313**

(87) International publication number:
**WO 2003/082016 (09.10.2003 Gazette 2003/41)**

(54) **A METHOD OF SCHEDULING A PRODUCTION RUN OF BAKERY PRODUCTS**

VERFAHREN ZUR PLANUNG EINER PRODUKTIONSSERIE VON BÄCKEREIPRODUKTEN

PROCEDE DE PLANIFICATION D'UN CYCLE DE PRODUCTION DE PRODUITS DE BOULANGERIE

(84) Designated Contracting States:
**AT BE BG CH CY CZ DE DK EE ES FI FR GB GR HU IE IT LI LU MC NL PT RO SE SI SK TR**

(30) Priority: **02.04.2002 AU PS147802**
**22.04.2002 AU PS187102**

(43) Date of publication of application:
**29.12.2004 Bulletin 2004/53**

(73) Proprietor: **Moffat Pty Limited**
**Mulgrave,**
**Victoria 3170 (AU)**

(72) Inventor: **WILLETT, Paul, Eaton**
**Narangba, Queensland 4504 (AU)**

(74) Representative: **Khan, Mohammed Saiful Azam et al**
**Potter Clarkson LLP**
**Park View House**
**58 The Ropewalk**
**Nottingham**
**NG1 5DD (GB)**

(56) References cited:
**DE-A1- 3 444 943** **DE-A1- 19 604 111**
**FR-A- 2 723 819** **GB-A- 2 274 768**

**Description**

**FIELD OF THE INVENTION**

This invention relates to a method of scheduling a production run of bakery products. Specifically, this invention relates to a method of scheduling a production run of bread products and therefore will be described in this context. However, it should be appreciated that other bakery products such as biscuits, cakes and/or buns or the like may be produced using the method.

**BACKGROUND OF THE INVENTION**

Consumers today demand a large variety of bakery products. For example it is not unusual for a bakery to produce rolls, loaves and/or buns of varying weights and shapes from white dough, wholemeal dough, oat bran dough, soy linseed dough and fruit dough. When a combination of these bakery products are produced it is not unusual for over one hundred bakery products to be produced in a single production run.

Supermarkets often require different production runs compared to small boutique bakeries. For example, supermarkets normally want their shelves full of bread at opening and run only smaller production runs during the day. Boutique bakeries may only bake their products in a single production run or bake their products continuously through the day.

It is usual that demand for bakery products varies throughout a single week. For example, weekend demand is normally higher than weekday demand. More exotic bakery products are also required on weekends.

It requires great skill and expertise to schedule a production run to produce all of the desired bakery products by a specified time. The major difficulty with producing a large variety of bakery products is there is often a large wastage of dough. It is not unusual for bakeries to waste up to 20 percent of dough from each batch. Further, once a production run has been planned it is difficult to change a production run midstream without creating substantial waste. Still further, it is preferable that full bags of flour are used as partially full opened bags need to be decanted and weighted prior to use.

DE 3444943 discloses a process for the production of various bread and bakery products of constant quality, and a plant for implementing the process. The document relates to preparing pre-mixed batches of bread making ingredients in a central location. At this central location the relative amounts of each ingredient are optimised based on the quality of the raw materials and the technical capabilities and requirements of the respective bakeries to which the pre-mixed batches are being sent. The premix batches are then dispatched to those bakeries. This document relates to qualify control of the products produced at each station.

OBJECT OF THE INVENTION

It is an object of the invention to overcome or alleviate one or more of the aforementioned disadvantages and/or provide the consumer with a useful or commercial choice.

SUMMARY OF THE INVENTION

In a first aspect, although not necessarily the only or broadest form, the invention resides in a method of producing a production run schedule for bakery products, the method including the steps of:

determining characteristics of bakery products to be produced, the characteristics including a dough type, a weight of dough required to produce each said bakery product and a number of said bakery products to be produced;

organising each bakery product to be produced into groups according to the dough type;

calculating a total weight of dough required for each bakery product to be produced;

calculating a number of full batches that can be produced of each bakery product;

calculating a weight of dough for each bakery product that cannot be produced in a batch with a whole number of bags of flour;

combining the respective weights of dough for bakery products of the same dough type that cannot be produced in a batch, with a whole number of bags of flour, into a batch of the same dough type; and

producing a corresponding production run schedule.

Preferably, the combined batches are full batches.

A production run can be defined as bakery products that are produced in a plurality of batches.

A batch can be defined as a single weight of dough produced at one time for baking.

Preferably, the above method is completed using a computer program and a database.

Preferably, each batch is displayed on a visual display unit. Each batch may be displayed graphically on the visual display unit. The bakery products produced in each batch may be identified graphically.

Preferably, the number of the bakery products can be changed to obtain full batches in the schedule. Preferably amendments may be made to a production run.

Preferably, the sequence of batches in a production run may be varied to suit specific requirements.

Preferably, an ingredient list is provided for each dough type. The ingredient list may be entered and/or changed for each dough type. The weight of ingredients for individual batches may be calculated dependent upon the total weight of the batch.

A schematic layout of how dough pieces are to be arranged on baking trays or in containers, prior to proving or baking, may be displayed graphically.

More preferably, the computer program controls or works in conjunction with a mixing machine.

Logs may be available to monitor historical baking times, batch production and production runs

The day's production run may be used to calculate the total flour requirement for the day.

In a second aspect, the invention provides a computer program for scheduling a production run for determined bakery products in predetermined quantities, the program being capable of performing the steps of:

determining characteristics of bakery products to be produced, the characteristics including a dough type, a weight of dough required to produce each said bakery product and a number of said bakery products to be produced

organising each bakery product to be produced into groups according to dough type;

calculating a total weight of dough required for each bakery product to be produced;

calculating a number of full batches that can be produced of each bakery product;

calculating a weight of dough for each bakery product that cannot be produced in a batch with a whole number of bags of flour;

combining the respective weights of dough for bakery products of the same dough type that cannot be produced in a batch with, a whole number of bags of flour, into a batch of the same dough type; and

producing a corresponding production run schedule for scheduling the production of bakery products.

The invention further provides, in a third aspect, a baking system including a computer with memory and a computer program according to the second aspect.

## BRIEF DESCRIPTION OF THE DRAWINGS

An embodiment of the invention, by way of example only, will now be described with reference to the accompanying figures in which:

FIG. 1 is a flow chart of the steps performed by a computer program according to the second and third aspects of the invention.

FIG. 2 is a table representing the type of bakery products to be produced.

FIG. 3 is a modified table of FIG. 2.

FIG. 4 is a graph representing a white dough production schedule for the table of FIG. 2.

FIG. 5 is a graph representing a white dough production schedule for the table of FIG. 3.

FIG. 6 is a graph representing a modified white dough production schedule of FIG. 5.

FIG. 7 is a graph representing a wholemeal dough production schedule for the table of FIG. 2.

FIG. 8 is a graph representing a wholemeal dough production schedule for the table of FIG. 3.

**DETAILED DESCRIPTION OF THE PREFERRED EMBODIMENT**

In this embodiment of the invention, a computer program and database has been developed to schedule a production run of bakery products. The computer program is run on a computer in conjunction with a mixing machine, such as the Genesis baking machine manufactured by Moffat Pty Ltd of Mulgrave, Victoria, Australia, formerly Bakenomics of Narangba, Queensland, Australia, to form a bakery system. The database is maintained on a memory accessible by the computer.

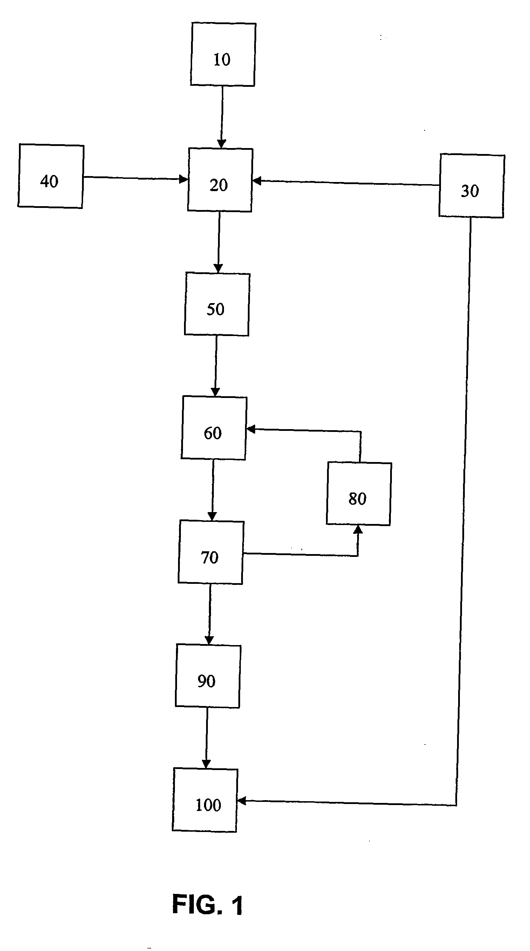

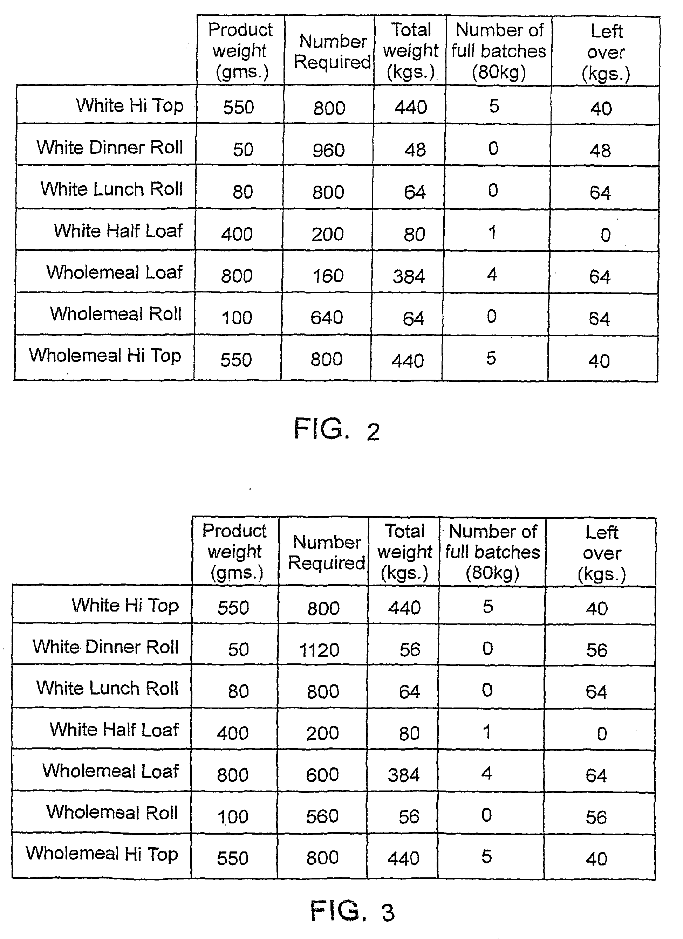

Referring to FIG. 1, to commence operation of the computer program, an operator enters the bakery products 10 that are to be baked into an initial phase. 20 of the computer program. A list of bakery products to be produced is shown in FIG. 2. Normally, the bakery products are associated with individual codes, eg White Hi Top = WHT, but for ease of reference the full name of each of the bakery products has been included in the table. A database 30 contains a full description of each product that is retrieved by the computer program through use of an individual code.

The weight of each of the bakery products is automatically obtained from the database 30. The weight of each bakery product is the weight of the dough that is required to produce the bakery product. The operator then enters the number 40 of each of the bakery products that are desired.

The total weight of dough that is required to produce each of the desired number of each of the bakery products is calculated 50 by the computer program. The total weight is obtained using the following formula:

*Product Weight x Number Required = Total Weight*

Using the Genesis machine, a batch of 80 kg is produced using a four 12.5 kg bags. A single bag of flour is used to mix 20 kg of dough. It should be appreciated that batch sizes may be increased or decreased depending upon the capabilities of the machine and/or size of the flour bags.

The number of full batches that are needed to produce the number of each of the bakery products is then calculated 60 by the computer program according to the following formula:

## Total Weight / Batch Size = No of Full Batches

Depending on number of bakery products that are required, there is often remaining kilograms of bakery product that cannot be produced in a batch comprising a whole number of bags of flour. That is, there is left over bakery product. This remaining weight of bakery product must still be produced to obtain the desired number of product. This method allows the remaining product to be located at a start of a batch. The mixing machine allows a quick change of bakery product so that a batch can have any number of different products.

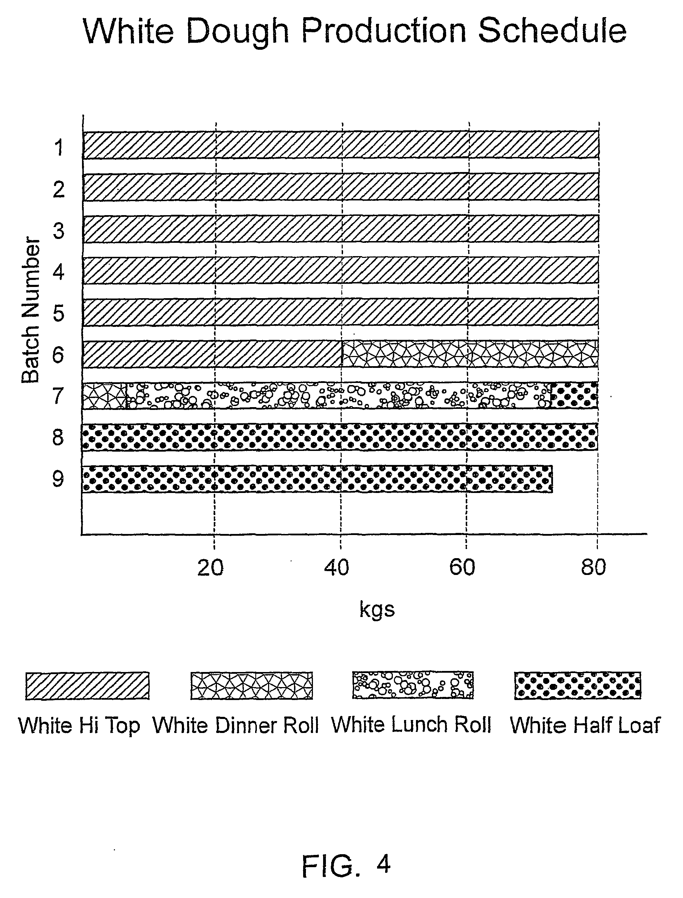

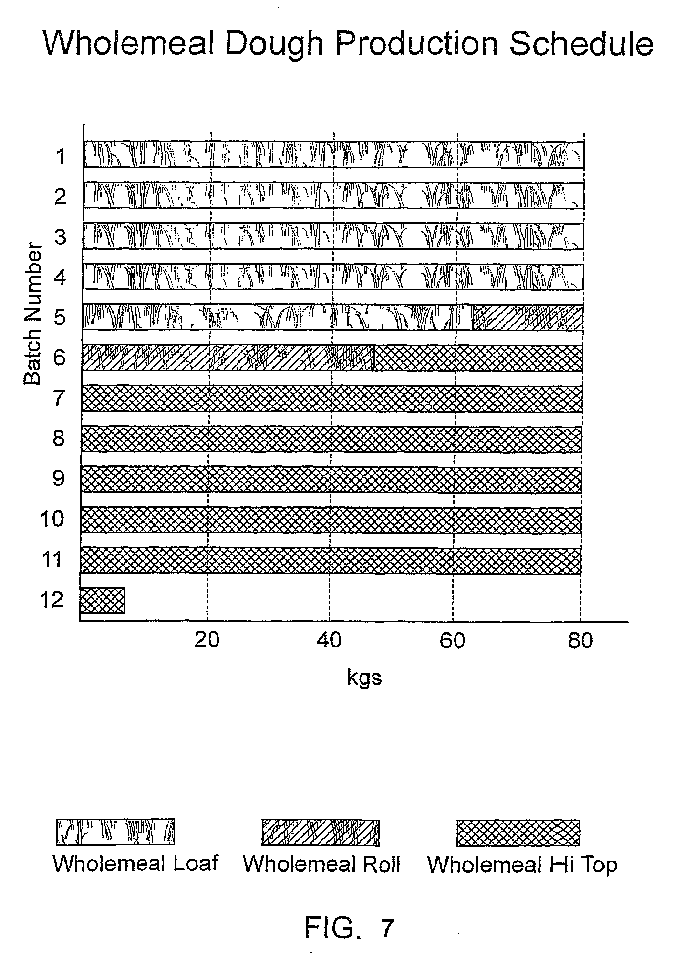

The computer program produces a graphical display 70 on a visual display unit of the production schedule for each dough type as shown in FIG. 4 and FIG. 7. The schedules are produced for each dough type eg. white and wholemeal dough. A shading system is used as a form of graphical identification to differentiate the different bakery products. A key may be produced to represent the different products.

Different production schedules are produced for different dough types. The same batches of dough type are run consecutively as the machine must be cleaned between different dough types being used. Dough types are determined by analysing the codes for each of the bakery products.

The production schedule visually displays if a batch is not a full batch. For example, FIG. 4 shows that there is a short fall of 2kg in batch 9 and FIG. 7 shows there is a over supply of 2kg in Batch 12.

An operator can then choose 80 to reduce or increase the number of bakery products to obtain a batch comprising a whole number of bags of flour, but preferably a full batch. For example, after reviewing the production schedules of FIG. 4 and FIG. 7, an operator may increase the number of White Dinner Rolls from 240 to 260 and reduce the number of Wholemeal Rolls from 160 to 140 as shown in FIG. 2.

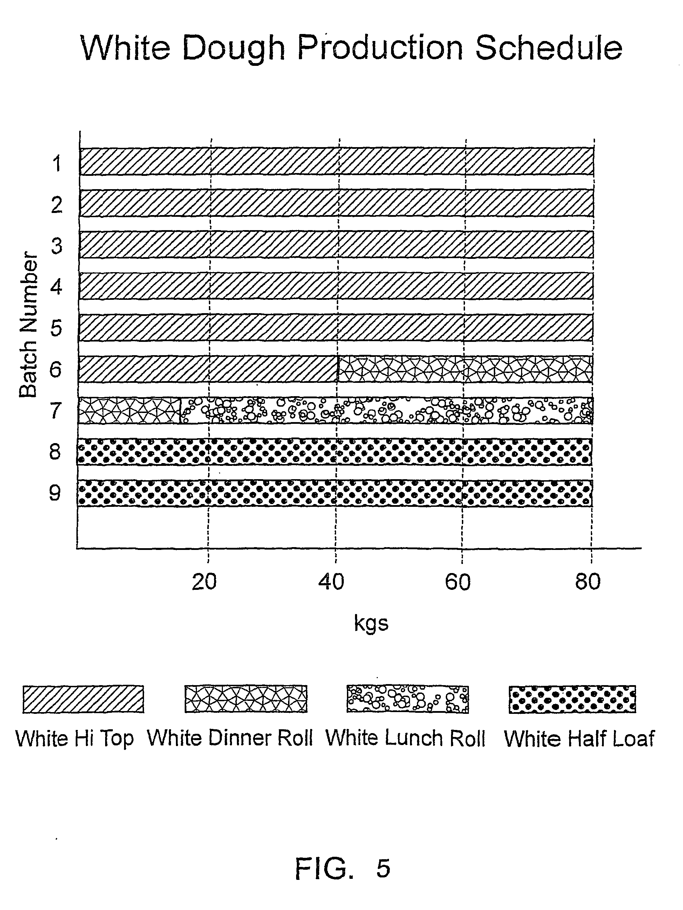

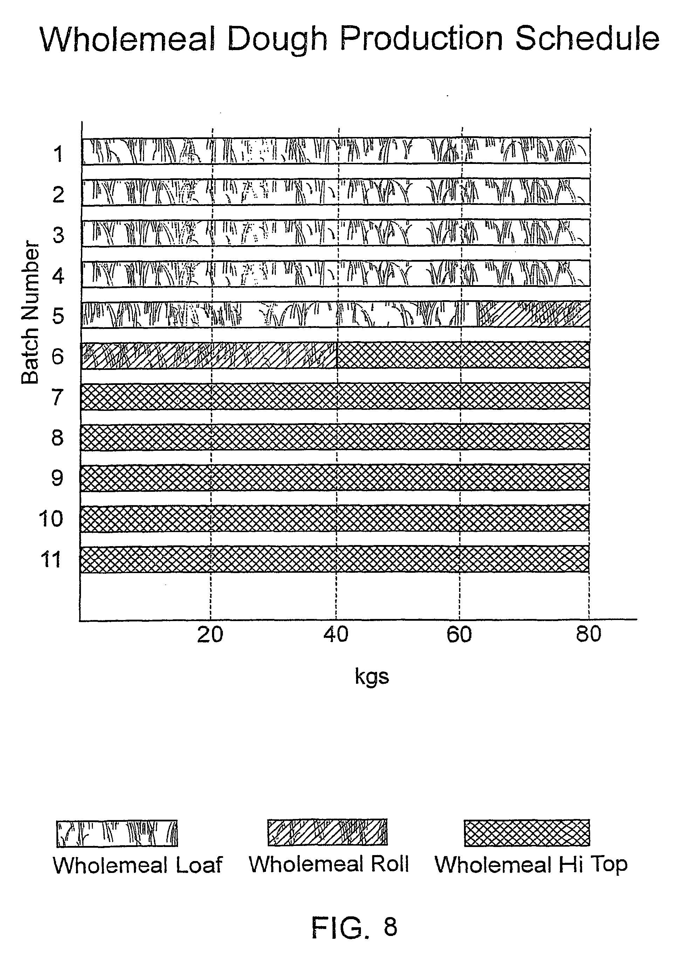

The computer program then recalculates the number of full batches 60 with the modified bakery product numbers and a new production schedule is then produced for visual display 70 as shown in FIG. 5 and FIG. 8. An operator easily sees that the batches are all full from the production schedules.

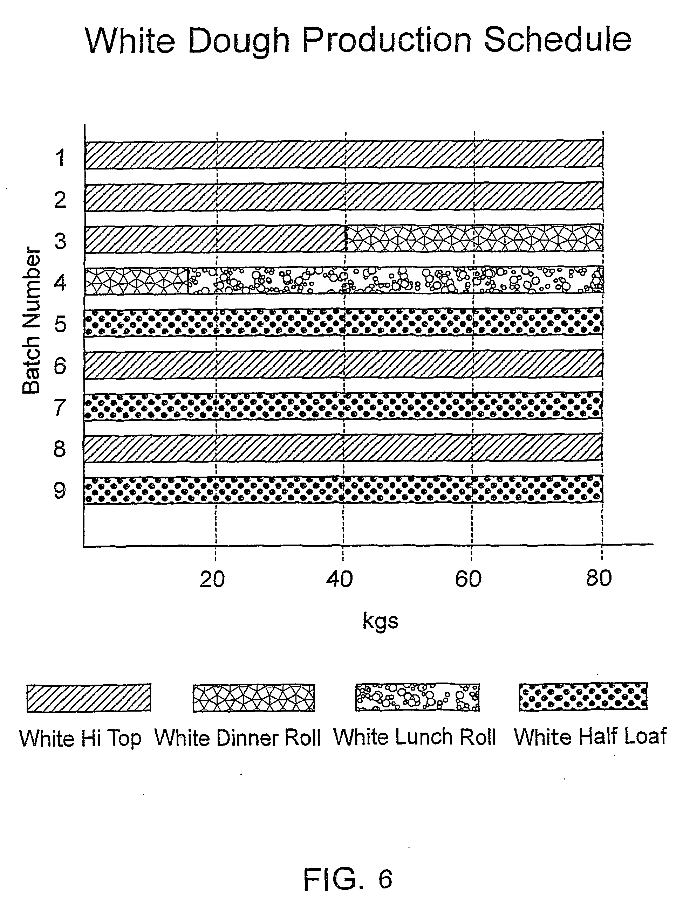

An operator is also able to move batches to different positions on the production schedules to change the order of production as shown in FIG. 6.

One the final production schedule has been determined, then the total days flour requirement for each dough type is calculated 90 by the computer program according to the formula:

$$\textit{Total Weight of Product/ Weight of Dough that 1 bag of Flour Produces =}$$

$$\textit{Total No. of Flour Bags Required.}$$

The flour can then easily be obtained from a storeroom prior to commencement of the production run.

Typically, the production schedule is produced at least one day before the production run by using the computer program and database. The production run can then be saved and retrieved when desired.

Once the production run is desired, an operator retrieves the production run from a computer. The computer indicates the order of the batches and what products are produced in each batch. An ingredient list is then produced 100 for the first batch. Ingredients typically include the amount of water, the amount of flour, the amount of yeast and any other ingredients.

The list of ingredients and their relative combination ratio needed to produce a specified weight (for example 20 kg) of each dough type are contained in the database 30. They are retrieved from the database 30 when the ingredients list is to be prepared by the computer program. The weight of each of the ingredients is simply a ratio of the amount of dough that is to be produced compared to the standard ratio located in the database.

It should be appreciated that some mixing machines may have automatic dispensing devices that may dispense some ingredients automatically. In this instance, the computer program and database may communicate directly with the mixing machine.

Once each of the ingredients is entered into the mixing machine and the operator confirms this on the computer, the mixing machine is then used to mix the dough. A mixing time for the type of dough is calculated and entered into the mixing machine.

When the dough exits the machine after it has been mixed, the operator is provided with a screen that shows the layout of dough pieces as they are to be arranged on backing trays and/or containers prior to proving and baking. Any instructions relating to the placement of the dough piece and any further ingredients are also indicated.

For example, for white cheese top rolls, a screen may be produced that shows a standard baking tray that has the rolls placed in a 3 x 4 configuration on the baking tray. The instructions may include turning the dough piece over and place upside-down on baking tray and add cheese to top of roll.

The computer program may also receive feedback from the mixing machine and operator. This feedback is stored in the database for retrieval and analysis. The following may be measured:

1. Machine efficiency = Mixing time vs Loading time of Ingredients

2. Time that each products leaves the mixing machine to provide the individual batch mixing time, the total mixing time, the total lead time and the total time to produce the production run.

3. Any failed production e.g. incorrect ingredients

4. Any amendments made to the production run.

This method allows for little to no wastage of dough. Further, an inexperienced operator can prepare bread products with little or no input from experienced personal as the operator needs to make very few decisions. Feedback can be viewed to assist in producing more efficient operations.

**Claims**

**1.** A method of producing a production run schedule of bakery products, the method including the steps of:

determining characteristics of bakery products (10) to be produced, the characteristics including a dough type, a weight of dough required to produce each said bakery product and a number of said bakery products (40) to be produced;
organizing each bakery product (10) to be produced into groups according to the dough type;
calculating a total weight of dough required for each bakery product (10) to be produced;
calculating a number of full batches that can be produced of each bakery product (10);

**characterised in** the steps of:

calculating a weight of dough for each bakery product (10) that cannot be produced in a batch with a whole number of bags of flour;

combining the respective weights of dough for bakery products (10) of the same dough type that cannot be produced in a batch, with a whole number of bags of flour, into a batch of the same dough type; and

producing a corresponding production run schedule.

2. A method according to claim 1, wherein the combined batches are full batches.

3. A method according to claim 1 or 2, wherein the schedule is amendable to ensure each batch in the schedule includes a whole number of bags of flour.

4. A method according to claim 3, wherein the number of bakery products is amendable to obtain full batches in the schedule.

5. A method according to claim 2, wherein the sequence of batches in the schedule is amendable.

6. A method according to any one of the preceding claims, wherein the bakery products (10) of the same dough type are arranged in consecutive batches.

7. A method according to any one of the preceding claims, wherein the number of bakery products is multiplied by a weight of dough required to form a single bakery product, thereby to calculate a total weight of dough for each bakery product (10).

8. A method according to claim 7, wherein the method further includes displaying the batches, via a compute to permit subsequent amendment.

9. A method according to claim 8, wherein the step of displaying the batches involves displaying the batches graphically.

10. A method according to claim 9, wherein the graphical display of batches includes graphical identification of bakery products forming the displayed batch.

11. A method according to any one of the preceding claims, wherein the method includes the further step of providing a schematic layout of dough pieces on baking trays or in containers, prior to proving or baking.

12. A computer executable program embodies in computer readable instructions on a computer readable medium for scheduling a production run for determined bakery products (10) in predetermined quantities, the program being capable of performing the steps of:

determining characteristics of bakery products (10) to be produced, the characteristics including a dough type, a weight of dough required to produce each said bakery product and a number of said bakery products (40) to be produced, organising each bakery product to be produced into groups according to dough type;

calculating a total weight of dough required for each bakery product to be produced;

calculating a number of full batches that can be produced of each bakery product;

**characterised in** the steps of:

calculating a weight of dough for each bakery product that cannot be produced in a batch with a whole number of bags of flour; and

combining the respective weights of dough for bakery products of the same dough type that cannot be produced in a batch with a whole number of bags of flour, into a batch of the same dough type; and

producing a corresponding production run schedule for scheduling the production of bakery products (10).

13. A computer program according to claim 12, wherein the combined batches are full batches.

14. A computer program according to claim 12 or 13, wherein the program performs the further step of displaying the batches to permit subsequent amendments of the schedule.

15. A computer program according to claim 14, wherein the batches are displayed graphically.

16. A computer program according to claim 15, wherein the graphical display of batches includes graphical identification of bakery products forming the displayed batch.

17. A computer program according to claim 16, wherein the program provides a schematic layout of dough pieces on baking trays or in containers, prior to proving or baking.

18. A baking system including: a computer with memory; and a computer program according to any of claims 12 to 17.

19. A baking system according to claim 18, wherein the system includes baking machinery linked to the computer for control thereby.

20. A baking system according to claim 19, wherein the baking machinery provide feedback to the program, the feedback comprising any one or more of the following:

    a) ingredients mixing and loading times expressed as a machine efficiency;
    b) individual batch mixing times;
    c) total mixing time;
    d) total lead time;
    e) total time to produce a production run;
    f) failed production; and
    g) amendments made to the production run.

**Patentansprüche**

1. Verfahren zur Herstellung eines Produktionsablaufplanes für Bäckereiprodukte, wobei das Verfahren die Schritte umfasst:

    Bestimmen der Charakteristika von herzustellenden Bäckereiprodukten (10), wobei die Charakteristika einen Teigtyp, ein Gewicht des zum Herstellen des Bäckereiproduktes erforderlichen Teigs und die Anzahl der herzustellenden Bäckereiprodukte umfasst;
    Organisieren jedes herzustellenden Bäckereiproduktes (10) in Gruppen entsprechend dem Teigtyp;
    Berechnen eines Gesamtgewichts des benötigten Teigs für jedes herzustellende Bäckereiprodukt (10);
    Berechnen einer Anzahl von vollen Chargen bzw. Blechen, die für jedes Bäckereiprodukt (10) hergestellt werden können;
    **gekennzeichnet durch** die Schritte:

    Berechnen eines Teiggewichtes für jedes Bäckereiprodukt (10), das nicht in einer Charge mit einer ganzen Zahl von Mehlbeuteln hergestellt werden kann;
    Kombinieren der jeweiligen Gewichte des Teigs für Bäckereiprodukte (10) für den gleichen Teigtyp, die nicht in einer Charge hergestellt werden können, mit einer Gesamtzahl von Mehlbeuteln in eine Charge desselben Teigtyps; und
    Erzeugen eines entsprechenden Produktionsablaufschemas.

2. Verfahren nach Anspruch 1, bei dem die kombinierten Chargen volle Chargen sind.

3. Verfahren nach Anspruch 1 oder 2, bei dem das Schema geändert werden kann, um sicherzustellen, dass jede Charge in dem Schema eine ganze Zahl von Mehlbeuteln enthält.

4. Verfahren nach Anspruch 3, bei dem die Zahl der Bäckereiprodukte änderbar ist, um volle Chargen in dem Schema zu erhalten.

5. Verfahren nach Anspruch 2, bei dem die Folge der Chargen in dem Schema änderbar ist.

6. Verfahren nach einem der vorhergehenden Ansprüche, bei dem die Bäckereiprodukte (10) des gleichen Teigtyps in aufeinanderfolgenden Chargen angeordnet sind.

7. Verfahren nach einem der vorhergehenden Ansprüche, bei dem die Zahl der Bäckereiprodukte mit einem Teiggewicht multipliziert wird, das zum Ausbilden eines einzelnen Bäckereiprodukts benötigt wird, um so ein Gesamtgewicht des Teigs für jedes Bäckereiprodukt (10) zu berechnen.

8. Verfahren nach Anspruch 7, bei dem das Verfahren des Weiteren das Anzeigen der Chargen über einen Computer umfasst, um nachfolgende Änderungen zuzulassen.

9. Verfahren nach Anspruch 8, bei dem der Schritt des Anzeigens der Chargen das grafische Anzeigen der Chargen umfasst.

10. Verfahren nach Anspruch 9, bei dem die grafische Anzeige der Chargen eine grafische Identifikation der Bäckereiprodukte umfasst, die die anzuzeigende Charge bilden.

11. Verfahren nach einem der vorangehenden Ansprüche, bei dem das Verfahren des Weiteren den Schritt umfasst, ein schematisches Layout des Teigstücks auf Backblechen oder in Behältern vorzusehen, bevor diese bereitgestellt oder gebacken werden.

12. Computerausführbares Programm, das als computerlesbare Befehle auf einem computerlesbaren Medium verkörpert ist, um einen Produktionsablauf zu planen, zur Bestimmung von Bäckereiprodukten (10) in vorgegebenen Mengen, wobei das Programm in der Lage ist, die Schritte auszuführen:

Bestimmen der Charakteristika von Bäckereiprodukten (10), wobei die Charakteristika einen Teigtyp, ein Gewicht des zum Herstellen des Bäckereiproduktes erforderlichen Teigs und eine Anzahl der herzustellenden Bäckereiprodukte (40) umfasst;
Organisieren jedes herzustellenden Bäckereiproduktes in Gruppen entsprechend dem Teigtyp;
Berechnen eines Gesamtgewichts des benötigten Teigs für jedes herzustellende Bäckereiprodukt;
Berechnen einer Anzahl von vollen Chargen, die für jedes Bäckereiprodukt hergestellt werden können;
**gekennzeichnet durch** die Schritte:

Berechnen eines Teiggewichtes für jedes Bäckereiprodukt, das nicht in einer Charge mit einer ganzen Zahl von Mehlbeuteln hergestellt werden kann; und
Kombinieren der jeweiligen Teiggewichte für Bäckereiprodukte des gleichen Teigtyps, die nicht in einer Charge mit einer ganzen Zahl von Mehlbeuteln hergestellt werden können, in eine Charge des gleichen Teigtyps; und
Erzeugen eines entsprechenden Produktionsablaufschemas zum Planen der Herstellung der Bäckereiprodukte (10).

13. Computerprogramm nach Anspruch 12, bei dem die kombinierten Chargen volle Chargen sind.

14. Computerprogramm nach Anspruch 12 oder 13, bei dem das Programm des Weiteren den Schritt des Anzeigens der Charge durchführt, um nachfolgende Änderungen des Schemas zu ermöglichen.

15. Computerprogramm nach Anspruch 14, bei dem die Chargen grafisch dargestellt werden.

16. Computerprogramm nach Anspruch 15, bei dem die grafische Darstellung der Chargen eine grafische Identifikation der Bäckereiprodukte die die angezeigte Charge bilden, enthält.

17. Computerprogramm nach Anspruch 16, bei dem das Programm ein schematisches Layout der Teigstücke auf Backblechen oder in Behältern vor dem Bereitstellen oder Backen vorsieht.

18. Backsystem mit einem Computer mit Speicher und einem Computerprogramm nach einem der Ansprüche 12 bis 17.

19. Backsystem nach Anspruch 18, bei dem das System eine mit dem Computer verbundene Backmaschine umfasst, um diese zu steuern.

20. Backsystem nach Anspruch 19, bei dem die Backmaschine eine Rückkopplung zu dem Programm vorsieht, wobei die Rückkopplung eins oder mehreren aus dem Folgenden umfasst:

a) Zutatenmisch- und Ladezeiten ausgedrückt als eine Maschineneffizienz;

b) individuelle Chargenmischzeiten;
c) Gesamtmischzeit;
d) Gesamtladezeit;
e) Gesamtzeit zur Herstellung eines Produktionsablaufs;
f) fehlgeschlagene Produktion; und
g) am Produktionsablauf vorgenommene Änderungen.

**Revendications**

1. Procédé de mise en place d'un plan de cycle de production de produits de boulangerie, le procédé incluant les étapes consistant à :

   déterminer les caractéristiques des produits de boulangerie (10) à fabriquer, les caractéristiques incluant la sorte de pâte, le poids de pâte requis pour fabriquer chaque produit de boulangerie et le nombre desdits produits de boulangerie (40) à fabriquer ;
   répartir chaque produit de boulangerie (10) à fabriquer dans des groupes selon la sorte de pâte ;
   calculer le poids total de pâte requis pour chaque produit de boulangerie (10) à fabriquer ;
   calculer le nombre de fournées complètes de chaque produit de boulangerie (10) qui peuvent être fabriquées ;

   **caractérisé par** les étapes consistant à :

   calculer le poids de pâte pour chaque produit de boulangerie (10) qui ne peut pas être fabriqué en une fournée avec un nombre entier de sacs de farine ;
   combiner les poids respectifs de pâte pour les produits de boulangerie (10) de la même sorte de pâte qui ne peuvent pas être fabriqués en une fournée, avec un nombre entier de sacs de farine, dans une fournée de la même sorte de pâte ; et
   mettre en place un plan de cycle de production correspondant.

2. Procédé selon la revendication 1, dans lequel les fournées combinées sont des fournées complètes.

3. Procédé selon la revendication 1 ou 2, dans lequel le plan est modifiable pour assurer que chaque fournée dans le plan inclut un nombre entier de sacs de farine.

4. Procédé selon la revendication 3, dans lequel le nombre de produits de boulangerie est modifiable pour obtenir des fournées complètes dans le plan.

5. Procédé selon la revendication 2, dans lequel la séquence des fournées dans le plan est modifiable.

6. Procédé selon l'une quelconque des revendications précédentes, dans lequel les produits de boulangerie (10) de la même sorte de pâte sont disposés dans des fournées consécutives.

7. Procédé selon l'une quelconque des revendications précédentes, dans lequel le nombre de produits de boulangerie est multiplié par le poids de pâte requis pour former un seul produit de boulangerie, de façon à calculer le poids total de pâte pour chaque produit de boulangerie (10).

8. Procédé selon la revendication 7, dans lequel le procédé inclut en outre l'affichage des fournées par l'intermédiaire d'un ordinateur pour permettre une modification subséquente.

9. Procédé selon la revendication 8, dans lequel l'étape consistant à afficher les fournées fait intervenir l'affichage des fournées graphiquement.

10. Procédé selon la revendication 9, dans lequel l'affichage graphique des fournées inclut une identification graphique des produits de boulangerie formant la fournée affichée.

11. Procédé selon l'une quelconque des revendications précédentes, lequel procédé inclut l'étape supplémentaire consistant à fournir un schéma d'agencement des pâtons sur les plateaux de cuisson ou dans les récipients, avant la fermentation ou la cuisson.

**12.** Programme exécutable sur ordinateur mis en oeuvre dans des instructions lisibles par ordinateur sur un milieu lisible par ordinateur pour planifier un cycle de production pour des produits de boulangerie (10) déterminés en des quantités prédéterminées, le programme étant apte à effectuer les étapes consistant à :

déterminer les caractéristiques des produits de boulangerie (10) à fabriquer, les caractéristiques incluant la sorte de pâte, le poids de pâte requis pour fabriquer chaque produit de boulangerie et le nombre desdits produits de boulangerie (40) à fabriquer, à répartir chaque produit de boulangerie à fabriquer dans des groupes selon la sorte de pâte ;
calculer le poids total de pâte requis pour chaque produit de boulangerie à fabriquer ;
calculer le nombre de fournées complètes de chaque produit de boulangerie qui peuvent être fabriquées ;

**caractérisé par** les étapes consistant à :

calculer le poids de pâte pour chaque produit de boulangerie qui ne peut pas être fabriqué en une fournée avec un nombre entier de sacs de farine ; et
combiner les poids respectifs de pâte pour les produits de boulangerie de la même sorte de pâte qui ne peuvent pas être fabriqués en une fournée, avec un nombre entier de sacs de farine, dans une fournée de la même sorte de pâte ; et
mettre en place un plan de cycle de production correspondant pour planifier la fabrication des produits de boulangerie (10).

**13.** Programme informatique selon la revendication 12, dans lequel les fournées combinées sont des fournées complètes.

**14.** Programme informatique selon la revendication 12 ou 13, lequel programme effectue l'étape supplémentaire consistant à afficher les fournées pour permettre des modifications subséquentes du plan.

**15.** Programme informatique selon la revendication 14, dans lequel les fournées sont affichées graphiquement.

**16.** Programme informatique selon la revendication 15, dans lequel l'affichage graphique des fournées inclut l'identification graphique des produits de boulangerie formant la fournée affichée.

**17.** Programme informatique selon la revendication 16, lequel programme procure un schéma d'agencement des pâtons sur les plateaux de cuisson ou dans les récipients, avant la fermentation ou la cuisson.

**18.** Système de cuisson au four incluant : un ordinateur ayant une mémoire ; et un programme informatique selon l'une quelconque des revendications 12 à 17.

**19.** Système de cuisson au four selon la revendication 18, lequel système inclut un appareil de cuisson au four relié à l'ordinateur pour le contrôler ainsi.

**20.** Système de cuisson au four selon la revendication 19, dans lequel l'appareil de cuisson au four renvoie des informations au programme, le renvoi d'informations comprenant l'une quelconque ou toutes informations parmi les suivantes :

a) les temps de mélange et de chargement des ingrédients, exprimés comme étant le rendement de l'appareil ;
b) les temps de mélange des fournées individuelles ;
c) le temps total de mélange ;
d) le temps total de mise en production ;
e) le temps total pour effectuer un cycle de production ;
f) un échec de production ; et
g) les modifications apportées au cycle de production.

FIG. 1

| | Product weight (gms.) | Number Required | Total weight (kgs.) | Number of full batches (80kg) | Left over (kgs.) |
|---|---|---|---|---|---|
| White Hi Top | 550 | 800 | 440 | 5 | 40 |
| White Dinner Roll | 50 | 960 | 48 | 0 | 48 |
| White Lunch Roll | 80 | 800 | 64 | 0 | 64 |
| White Half Loaf | 400 | 200 | 80 | 1 | 0 |
| Wholemeal Loaf | 800 | 160 | 384 | 4 | 64 |
| Wholemeal Roll | 100 | 640 | 64 | 0 | 64 |
| Wholemeal Hi Top | 550 | 800 | 440 | 5 | 40 |

## FIG. 2

| | Product weight (gms.) | Number Required | Total weight (kgs.) | Number of full batches (80kg) | Left over (kgs.) |
|---|---|---|---|---|---|
| White Hi Top | 550 | 800 | 440 | 5 | 40 |
| White Dinner Roll | 50 | 1120 | 56 | 0 | 56 |
| White Lunch Roll | 80 | 800 | 64 | 0 | 64 |
| White Half Loaf | 400 | 200 | 80 | 1 | 0 |
| Wholemeal Loaf | 800 | 600 | 384 | 4 | 64 |
| Wholemeal Roll | 100 | 560 | 56 | 0 | 56 |
| Wholemeal Hi Top | 550 | 800 | 440 | 5 | 40 |

## FIG. 3

# White Dough Production Schedule

White Hi Top    White Dinner Roll    White Lunch Roll    White Half Loaf

## FIG. 4

# White Dough Production Schedule

FIG. 5

# White Dough Production Schedule

FIG. 6

# Wholemeal Dough Production Schedule

Wholemeal Loaf    Wholemeal Roll    Wholemeal Hi Top

## FIG. 7

# Wholemeal Dough Production Schedule

FIG. 8

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- DE 3444943